# FASCICULE DE BREVET EUROPEEN

(11) **EP 2 158 097 B1**
(45) Date de publication et mention de la délivrance du brevet: **02.03.2011**
(21) Numéro de dépôt: 08760334.6
(22) Date de dépôt: 02.06.2008
(51) Int. Cl.: B60C 11/01, B60C 19/00

(54) **PNEU POURVU D'UN DISPOSITIF DEVIATEUR DE PROJECTIONS**
REIFEN MIT SPRITZUMLENKVORRICHTUNG
TYRE WITH PROJECTION DIVERSION DEVICE

(30) Priorité: 01.06.2007 FR 0703930
(43) Date de publication de la demande: 03.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: D'HARCOURT, Jean-Marc, F-63000 Clermont-Ferrand (FR); SONILHAC, Fabien, F-63410 Loubeyrat (FR)
(74) Mandataire: Diernaz, Christian
(86) Numéro de dépôt international: PCT/EP2008/056747
(87) Numéro de publication internationale: WO 2008/145752

(56) Documents cités:
- EP-A- 1 048 489
- FR-A- 2 214 602
- FR-E- 83 303
- US-A- 4 881 586

## Description

L'invention concerne les pneumatiques pour véhicules routiers de type poids lourd et en particulier les pneumatiques qui sont pourvus de dispositifs pour dévier les projections latérales d'eau lorsqu'un véhicule équipé desdits pneumatiques roule sur une chaussée recouverte d'eau.

Lors d'un roulage par temps de pluie, les manoeuvres de dépassement ou de croisement avec un véhicule poids lourd sont souvent très délicates pour les autres usagers compte tenu des quantités importantes d'eau qui peuvent être projetées latéralement par ledit véhicule et qui, en atteignant les pare-brise des autres véhicules, réduisent considérablement la visibilité des conducteurs.

Un pneumatique pour poids lourd est de façon générale composé de deux bourrelets destinés à être en contact avec une jante de montage, d'un sommet pourvu d'une bande de roulement présentant une surface de roulement destinée à venir en contact avec le sol pendant le roulage et de deux flancs assurant la liaison entre cette bande de roulement et les bourrelets.

Un tel pneumatique est renforcé par une armature de carcasse s'étendant d'un bourrelet à l'autre et par une armature de renforcement du sommet située radialement à l'extérieur de l'armature de carcasse, cette armature de sommet comprenant au moins deux nappes de renforts empilées, c'est-à-dire placées les unes sur les autres dans la direction radiale. Chaque nappe de l'armature de sommet est en général composée d'une pluralité de renforts disposés de manière à faire un angle allant de 0° à 70° avec la direction circonférentielle, mais il n'est cependant pas exclu que l'angle des renforts puisse être supérieur à 70°.

La bande de roulement d'un pneumatique poids lourd est en règle générale pourvue d'une sculpture formée d'éléments de relief délimités par des découpures (rainures et/ou incisions) destinées à conférer au pneumatique des performances d'adhérence sur route mouillée, en permettant notamment l'évacuation de l'eau.

Le pneumatique présente un encombrement de largeur maximale L mesuré au niveau de ses flancs lorsqu'il est monté sur sa roue de montage et soumis à ses conditions nominales d'utilisation de pression et de charge (L représente la distance maximale entre les points des flancs du pneu axialement les plus éloignés). Axialement désigne ici une direction parallèle à l'axe de rotation du pneu monté sur jante.

Le brevet européen EP 1048489 décrit la mise en oeuvre d'un dispositif modifiant sensiblement la hauteur des projections latérales d'eau lors d'un roulage sur chaussée revêtue d'eau. Ce dispositif comprend, sur au moins un des flancs du pneumatique, au moins une nervure circonférentielle en mélange de caoutchouc, cette nervure étant placée sur le flanc du pneu situé côté extérieur au véhicule.

Cette protubérance a pour rôle d'abaisser vers la chaussée la trajectoire du flux de liquide projeté par le roulage du pneu afin d'éviter que ce flux ne soit projeté trop en hauteur en formant un brouillard gênant les autres usagers de la route.

La solution décrite dans ce brevet permet de limiter les augmentations de températures à l'intérieur de la bande de roulement et notamment au voisinage des extrémités des nappes de renforcement de sommet.

Toutefois, il apparaît à l'usage que le dispositif décrit dans ce brevet peut encore être amélioré. En effet, il a été constaté que le flux dévié pouvait être perçu comme ayant trop de puissance et qu'il pouvait alors atteindre des distances assez grandes dans une direction transversale (c'est-à-dire parallèlement à l'axe de rotation du pneu).
Le document FR-A-2 214 602 montre un pneu comprenant toutes les caractéristiques du préambule de la revendication 1.

Le pneumatique de l'invention cherche à améliorer cet état de fait en proposant une solution qui tout en réduisant la hauteur du jet latéral de liquide en roulage sur chaussée revêtue d'eau oriente différemment ce jet et crée une diminution de la puissance de ce jet et limite la puissance des projections latérales d'eau faisant un angle avec la direction axiale.

Dans ce but, un pneumatique pour véhicule poids lourd selon l'invention comprend une bande de roulement, des flancs prolongeant axialement et radialement vers l'intérieur la bande de roulement (par radialement vers l'intérieur on entend ici dans une direction pointant vers l'axe de rotation du pneu), la bande de roulement ayant une face de roulement destinée à être en contact avec le sol pendant le roulage et des faces latérales axialement de part et d'autre de la bande. Ce pneu a, en outre, sur au moins l'un de ses flancs et au voisinage de la bande de roulement, un dispositif anti projection d'eau dans la direction transversale (correspondant à une direction parallèle à l'axe de rotation du pneu) lors d'un roulage sur chaussée revêtue d'eau par temps de pluie. Ce dispositif anti projection est formé d'une nervure circonférentielle destinée à modifier la hauteur des projections d'eau (de fait cette nervure circonférentielle peut être constituée d'une nervure unique continue circonférentiellement ou bien de plusieurs nervures discontinues se succédant dans la direction circonférentielle).

La nervure circonférentielle a une paroi externe formée d'une première paroi et d'une seconde paroi, la première paroi s'étendant entre un flanc du pneu et une ligne circonférentielle reliant les points de la nervure circonférentielle les plus à l'extérieur axialement, la seconde paroi étant dans le prolongement de la première paroi et s'étendant radialement vers l'extérieur jusqu'à se raccorder avec une face latérale de la bande de roulement. La nervure circonférentielle comprend en outre un dispositif déviateur du flux des projections d'eau dans le cas d'un roulage du pneu sur sol revêtu d'eau, ce dispositif déviateur étant formé d'une pluralité de protubérances faisant saillie sur la seconde paroi de la nervure circonférentielle, ces protubérances étant arrangées de manière à orienter en grande partie voire en totalité le flux des projections d'eau suivant une direction principale différente de la direction transversale. En outre, la nervure circonférentielle pourvue d'un dispositif déviateur comprend en outre une pluralité de plots pour diminuer la puissance du flux lors d'un roulage sur sol revêtu d'eau, ces plots étant disposés entre les protubérances du dispositif déviateur. Par direction principale différente de la direction transversale, on entend ici que la direction de la plus grande partie des projections axialement au-delà du dispositif déviateur fait un angle qui est supérieur à zéro degré avec la direction de l'axe de rotation du pneu.

La pluralité de plots de gomme disposés entre les protubérances du dispositif déviateur a pour effet de limiter la puissance des projections latérales d'eau faisant un angle avec la direction axiale.

Préférentiellement, chaque protubérance formée sur la seconde paroi de la nervure circonférentielle est conçue pour orienter le flux des projections d'eau selon un angle au moins égal à 30 degrés avec la direction transversale (c'est-à-dire une direction parallèle à la direction de l'axe de rotation du pneu).

Pour éviter le plus possible toute projection dans une direction parallèle à l'axe de rotation, il est avantageux que le dispositif déviateur comprenne une pluralité de petites nervures faisant un angle moyen supérieur à 30 degrés avec la direction axiale.

Dans une variante avantageuse, ces petites nervures sont décalées dans la direction circonférentielle de façon à ce que tout plan contenant l'axe de rotation, traverse au moins deux nervures du dispositif déviateur. Ces petites nervures forment un ensemble d'aubes qui en passant au voisinage de la région de contact du pneu avec la chaussée servent à évacuer et diriger l'eau expulsée latéralement par la bande de roulement du pneu au contact de la chaussée revêtue d'eau.

Chaque petite nervure du dispositif déviateur comprend des faces latérales dont une au moins présente une inclinaison moyenne avec la direction transversale du pneu qui est appropriée pour dévier le flux d'eau de la direction transversale. Dans une variante du dispositif déviateur, chaque petite nervure a une forme symétrique de part et d'autre d'un plan passant par l'axe de rotation du pneu et présente des parois latérales ayant des géométries aptes à orienter la plus grande partie du flux des projections de liquide selon au moins une direction différente de la direction transversale au moment du passage dans le contact avec la chaussée.

Dans une variante du dispositif déviateur, chaque protubérance est formée de plusieurs plots de gomme en saillie sur la seconde paroi de la nervure circonférentielle, ces plots de gomme étant disposés de manière à permettre les projections dans une direction différente de celle de l'axe de rotation du pneu. Ces protubérances, tout en orientant le flux, servent également à en réduire sensiblement la puissance.

Dans toutes ces variantes de l'invention, chaque protubérance ou plot est un élément en matériau caoutchouc pouvant ou non être de même nature que le matériau constituant la nervure circonférentielle prévue sur le flanc.

Les protubérances peuvent toucher ou non la chaussée en roulage quand le pneu est neuf et que ce dernier porte sa charge nominale et est gonflé à sa pression nominale. Elles peuvent être prévues pour s'user avec la bande de roulement tout en conservant leur rôle même après une usure partielle de manière à avoir un dispositif pérenne.

Dès lors que le pneumatique comprend une armature de renforcement du sommet située radialement à l'extérieur de l'armature de carcasse, cette armature de sommet comprenant au moins deux nappes superposées, chaque nappe étant pourvue de renforts sous la forme de fils ou câbles, il est judicieux d'appliquer l'enseignement du brevet EP 1048489. Dans ce cas, chaque nervure circonférentielle répond aux critères énoncés dans ce brevet.

De cette manière, il est en effet possible à la fois d'obtenir une réduction sensible de la puissance des projections d'eau tout en limitant les élévations de température au voisinage des extrémités de nappes consécutives à l'ajout de matière caoutchouteuse.

Préférentiellement, les pneumatiques selon l'invention sont montés sur l'essieu avant des véhicules.

L'invention sera mieux comprise à l'aide des figures jointes à la présente description et montrant des variantes données à titre d'exemples non limitatifs :

- la figure 1 montre une partie d'un pneu pourvu sur un côté axialement à l'extérieur d'un dispositif déviateur selon l'art antérieur ;

- la figure 2 montre, une coupe méridienne schématique du pneu montré à la figure 1;

- la figure 3 montre, en élévation le dispositif déviateur montré avec les figures 1 et 2 ;

- la figure 4 montre une variante selon l'invention comprenant, outre un dispositif déviateur, une pluralité d'éléments réducteurs de puissance de flux ;

- la figure 5 montre une vue en perspective de la variante de la figure 4 ;

- la figure 6 montre en élévation une autre variante selon laquelle le dispositif déviateur est formé d'une pluralité de plots ;

- la figure 7 montre une vue en coupe d'un pneu selon la variante montrée avec la figure 6.

Pour faciliter la compréhension des figures en combinaison avec la description correspondante, des mêmes éléments structurels représentés sur ces figures sont désignés par les mêmes signes de référence.

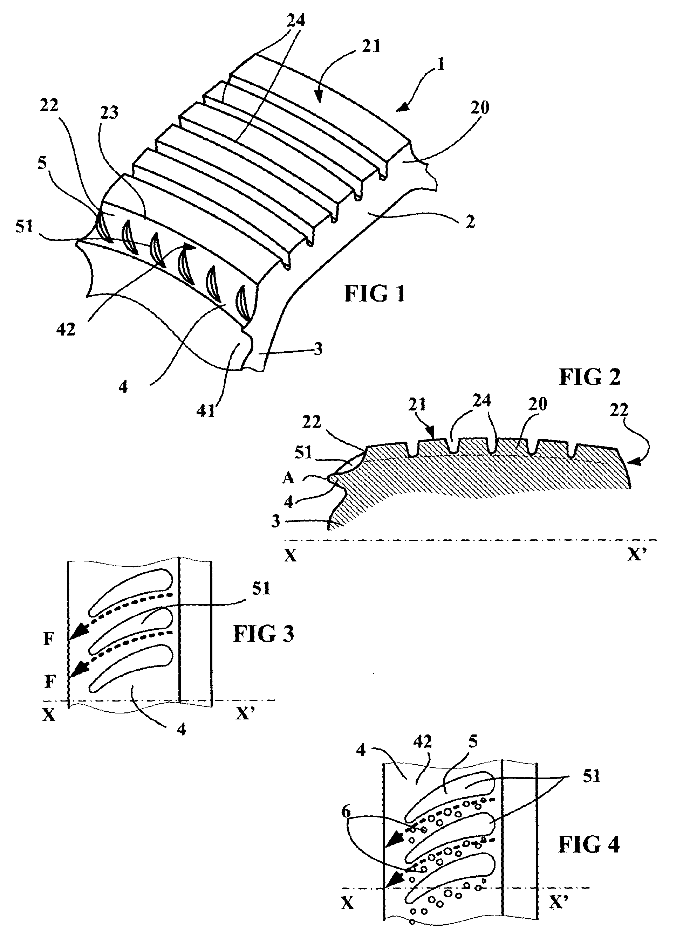

La figure 1 représente une coupe partielle d'un pneumatique 1 pour véhicule poids lourd selon l'invention. Cette coupe est réalisée dans un plan de coupe méridien, c'est-à-dire dans un plan contenant l'axe de rotation du pneu (cet axe est parallèle à la direction montrée par la ligne XX' sur la figure 2). Ce pneumatique 1 comprend une région de sommet 2 reliée à des bourrelets (non montrés ici) par des flancs 3. Le sommet 2 du pneumatique comprend une bande de roulement 20 délimitée radialement à l'extérieur par une surface de roulement 21, cette surface de roulement étant destinée à venir en contact avec la chaussée pendant le roulage du pneumatique, et des faces latérales 22. L'intersection de la surface de roulement 21 avec chaque face latérale 22 se fait suivant une arête 23. La bande de roulement 20 est pourvue de plusieurs rainures circonférentielles 24 pour favoriser un écoulement de l'eau vers l'arrière du pneu pendant un roulage sur sol revêtu d'eau.

Nonobstant la présence de ces rainures circonférentielles, on constate qu'une partie de l'eau est projetée dans une direction transversale (c'est-à-dire parallèle à l'axe de rotation du pneu). Pour éviter que ces projections latérales ne remontent trop en hauteur et gênent les autres usagers de la route, le pneu 1 est pourvu sur au moins un de ses flancs d'une nervure circonférentielle continue 4 en saillie vers l'extérieur du pneu (par définition, l'intérieur du pneu correspond à la cavité du pneu dans laquelle s'exerce la pression de gonflage). La nervure circonférentielle 4 est dans le cas présent réalisée par moulage au moment du moulage et de la vulcanisation du pneumatique 1.

Cette nervure circonférentielle 4 a une paroi externe formée d'une première paroi et d'une seconde paroi, la première paroi 41 s'étendant entre le flanc 3 du pneu et une ligne circonférentielle reliant les points (A) de la nervure circonférentielle 4 les plus à l'extérieur axialement, la seconde paroi 42 étant dans le prolongement de la première paroi 41 et s'étendant radialement vers l'extérieur jusqu'à se raccorder avec une face latérale 22 de la bande de roulement 20. Cette nervure circonférentielle 4 comprend, sur sa seconde paroi 42, un dispositif déviateur 5 du flux des projections d'eau dans le cas d'un roulage du pneu sur sol revêtu d'eau, ce dispositif déviateur 5 étant formé d'une pluralité de nervures 51 faisant saillie sur cette seconde paroi 42.

Dans le cas présent, chaque nervure 51 a une forme de petite nervure profilée pour orienter le flux des projections avec un angle égal à 45 degrés avec une direction parallèle à la direction axiale du pneu.

La figure 2 montre dans un plan de coupe méridien (c'est-à-dire dans un plan contenant l'axe de rotation du pneu) une vue partielle du pneu tel que montré à la figure 1. Sur cette figure 2, on distingue la bande de roulement 20 délimitée par sa surface de roulement 21 et ses deux surfaces latérales 22. Cinq rainures 24 forment des canaux d'évacuation de l'eau dans la direction circonférentielle.

Sur un flanc 3 du pneu, la nervure circonférentielle 4 est pourvue sur sa seconde surface de paroi 42 d'une pluralité de petites nervures 51 formant avec la nervure circonférentielle 4 une sorte de roue à aubes. Le côté sur lequel est disposée la nervure est bien entendu destiné à être placé côté extérieur véhicule.

Comme le montre notamment la figure 3, le flux des projections d'eau, vu dans une région proche du contact du pneu avec la route, est orienté par les petites nervures 51 selon des directions indiquées par des flèches F en traits pointillés. Les directions de ces flèches F axialement le plus à l'extérieur du pneu font un angle moyen qui est supérieur à zéro degré avec la direction transversale représentée par la direction XX' sur cette figure 3 (cette direction est parallèle à la direction de l'axe de rotation du pneu).

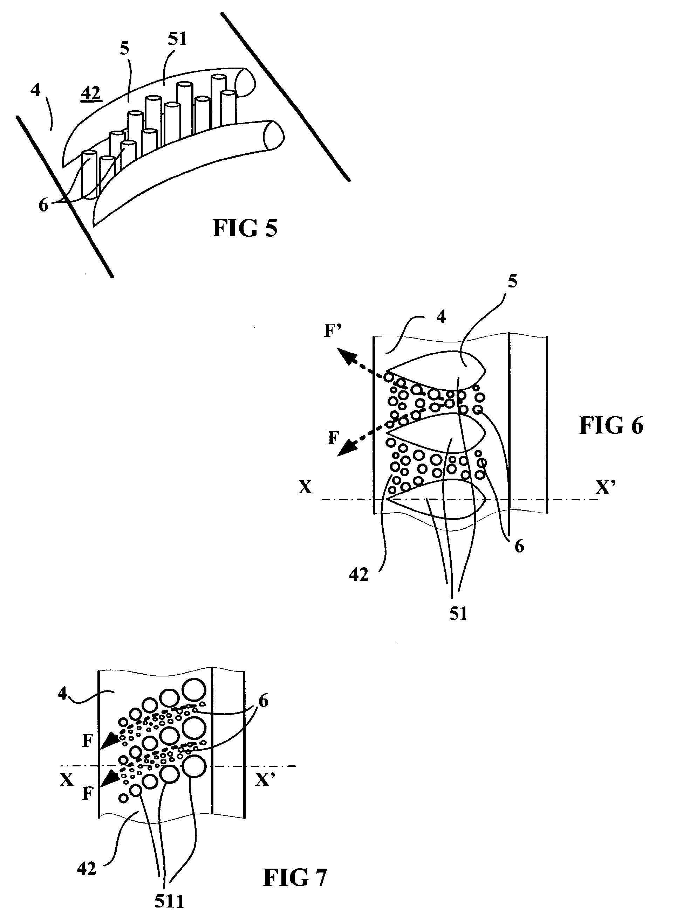

Afin de réduire sensiblement la puissance des projections tout en orientant celles-ci dans une direction différente de la direction axiale, il est introduit dans les espaces entre les petites nervures 51 du dispositif déviateur 5, une pluralité plots de gomme 6 en saillie sur la seconde surface de paroi 42 de la nervure circonférentielle 4 comme le montre la figure 4 représentant un pneu selon l'invention. Selon cette figure 4, le pneu selon l'invention reprend notamment les caractéristiques du pneu montré avec les figures 1 à 3 tout en y ajoutant les plots de gomme 6 destinés à réduire sensiblement la puissance des projections latérales. Ces plots de gomme 6 ont une flexibilité et un espacement appropriés pour toutefois laisser passer l'eau qui est orientée par les petites nervures 51. Dans le cas présent, les plots de gomme 6 ont une forme cylindrique et s'étendent radialement à partir de la nervure circonférentielle 4 sur une hauteur au moins égale à 50% de la hauteur moyenne des nervures 51 du dispositif déviateur comme cela est visible sur la figure 5 montrant une vue perspective de la variante montrée à la figure 4.

Dans une autre variante de l'invention, montrée avec la figure 6, les petites nervures 51 du dispositif déviateur 5 moulées sur la surface externe 42 de la nervure 4 d'un pneu ont une forme sensiblement symétrique par rapport à plan contenant l'axe de rotation XX' du pneu. Cette forme est apte à orienter de part et d'autre de chaque petite nervure 51 le flux suivant deux directions différentes de la direction transversale (repérées sur la figure 6 par les deux flèches F et F'). Entre les nervures 51, il est prévu une pluralité de plots de gomme 6 pour réduire la puissance des projections latérales.

Dans une autre variante selon l'invention montrée avec la figure 7, le dispositif déviateur 5 est formé d'une pluralité de plots 511 de gomme en saillie sur la seconde paroi 42 de la nervure circonférentielle 4. Selon cette variante, les plots 511 du dispositif déviateur 5 sont regroupés de manière appropriée pour dévier les projections latérales par rapport à la direction axiale XX'. Selon cette variante, les centres des sections des plots sont disposés sur une ligne courbe qui est sensiblement parallèle aux lignes d'écoulement des projections transversales montrées par les flèches F. Par ailleurs, les plots 511 ont à la fois des hauteurs et des sections décroissantes en allant axialement de l'intérieur du pneu vers l'extérieur (bien entendu, des variantes selon laquelle les sections des plots sont toutes identiques ou bien varient en sens inverse ressortent également de la présente invention). Dans les espaces entre les plots 511, on distingue une pluralité de plots 6 réducteurs de puissance des projections présentant des dimensions et rigidité appropriés pour fléchir sous l'effet des projections. A contrario les plots 511 du dispositif déviateur ont des rigidités appropriées pour ne pas fléchir sous l'effet des projections et permettre ainsi une modification de la trajectoire desdites projections.

Bien entendu, pour bénéficier des effets de l'invention en roulage, le pneu selon l'invention est monté sur un véhicule de façon que le flanc pourvu d'une nervure et d'un dispositif déviateur des projections soit placé côté extérieur dudit véhicule (c'est-à-dire visible de l'extérieur du véhicule).

Toutes les variantes décrites mettent en oeuvre une nervure circonférentielle continue ; il est bien sûr possible de mouler une nervure circonférentielle discontinue comme une succession de portions de nervure, chaque portion de nervure étant pourvue d'un dispositif déviateur de projections selon l'invention.

L'invention n'est pas limitée aux exemples décrits et représentés et diverses modifications peuvent y être apportées sans sortir de son cadre, defini par les revendications suivantes.

## Revendications

1. Pneu (1) ayant une bande de roulement (2), des flancs (3) prolongeant axialement et radialement vers l'intérieur la bande de roulement, la bande de roulement ayant une face de roulement (21) destinée à être en contact avec le sol pendant le roulage et des faces latérales axialement de part et d'autre de la bande, ce pneu ayant, en outre, sur au moins l'un des flancs et au voisinage de la bande de roulement, une nervure circonférentielle (4) destinée à modifier la hauteur des projections d'eau dans la direction transversale (correspondant à une direction parallèle à l'axe de rotation du pneu) dans le cas d'un roulage sur sol mouillé,
cette nervure circonférentielle (4) ayant une paroi externe formée d'une première paroi et d'une seconde paroi, la première paroi (41) s'étendant entre un flanc (3) du pneumatique et une ligne circonférentielle reliant les points (A) de la nervure circonférentielle les plus à l'extérieur axialement, la seconde paroi (42) étant dans le prolongement de la première paroi (41) et s'étendant radialement vers l'extérieur jusqu'à se raccorder avec une face latérale de la bande de roulement, la nervure circonférentielle comprenant un dispositif déviateur (5) du flux des projections d'eau dans le cas d'un roulage du pneu sur sol revêtu d'eau, ce dispositif déviateur (5) étant formé d'une pluralité de protubérances (51) faisant saillie sur la seconde paroi (42) de la nervure circonférentielle, ces protubérances (51) étant arrangées de manière à orienter le flux des projections d'eau suivant une direction principale différente de la direction transversale, ce pneumatique étant **caractérisé en ce que** la nervure circonférentielle (4) pourvue d'un dispositif déviateur (5) comprend en outre une pluralité de plots (6) pour diminuer la puissance du flux lors d'un roulage sur sol revêtu d'eau, ces plots (6) étant disposés entre les protubérances du dispositif déviateur (5).

2. Pneu selon la revendication 1 **caractérisé en ce que** chaque protubérance (51) disposée sur la seconde paroi (42) de la nervure circonférentielle est conçue et disposée pour orienter le flux des projections d'eau selon un angle au moins égal à 30 degrés avec la direction transversale.

3. Pneu selon la revendication 2 **caractérisé en ce que** le dispositif déviateur comprend une pluralité de petites nervures faisant un angle moyen supérieur à 30 degrés avec la direction transversale, ces petites nervures étant décalées dans la direction circonférentielle de façon à ce que tout plan radial, c'est-à-dire tout plan contenant l'axe de rotation, traverse au moins deux nervures du dispositif déviateur.

4. Pneu selon la revendication 2 **caractérisé en ce que** chaque protubérance (51) est formée de plusieurs plots (511) de gomme en saillie sur la seconde paroi (42) de la nervure circonférentielle (4).

5. Pneu selon la revendication 1 **caractérisé en ce que** chaque protubérance (51) disposée sur la seconde paroi (42) de la nervure circonférentielle (4) comporte des parois latérales dont les géométries sont aptes à orienter la plus grande partie du flux des projections de liquide selon au moins une direction différente de la direction transversale.

## Claims

1. Tyre (1) having a tread (2), sidewalls (3) axially and radially extending towards the inside of the tread, the tread having a running surface (21), intended to be in contact with the ground during running, and axially lateral faces on either side of the tread, this tyre having, furthermore, at least on one of the sidewalls and near the tread, a circumferential rib (4) intended to modify the height of expelled water in the transverse direction (corresponding to a direction parallel to the rotation axis of the tyre) in the case of the tyre running on wet ground, this circumferential rib (4) having an external wall formed from a first wall surface and a second wall surface, the first wall surface (41) extending between a sidewall (3) of the tyre and a circumferential line connecting the axially outermost points (A) of the circumferential rib, the second wall surface (42) being in the extension of the first wall surface (41) and extending radially outwards until joining with a lateral face of the tread, the circumferential rib comprising a deflector device (5) for deflecting the stream of expelled water in the case of the tyre running on water-covered ground, this deflector device (5) being formed from a plurality of protuberances (51) projecting from the second wall surface (42) of the circumferential rib, these protuberances (51) being arranged so as to direct the stream of expelled water in a main direction different from the transverse direction, this tyre being **characterized in that** the circumferential rib (4) provided with a deflector device (5) further includes a plurality of studs (6) for reducing the power of the stream when the tyre is running on water-covered ground, these studs (6) being placed between the protuberances of the deflector device (5).

2. Tyre according to Claim 1, **characterized in that** each protuberance (51) placed on the second wall surface (42) of the circumferential rib is designed and placed so as to direct the stream of expelled water at an angle of at least 30° with the transverse direction.

3. Tyre according to Claim 2, **characterized in that** the deflector device comprises a plurality of small ribs making an average angle greater than 30° with the transverse direction, these small ribs being offset in the circumferential direction so that any radial plane, i.e. any plane containing the rotational axis, passes through at least two ribs of the deflector device.

4. Tyre according to Claim 2, **characterized in that** each protuberance (51) is formed from several studs (511) of a rubber compound projecting from the second wall surface (42) of the circumferential rib (4).

5. Tyre according to Claim 1, **characterized in that** each protuberance (51) placed on the second wall surface (42) of the circumferential rib (4) has lateral walls, the geometries of which are capable of directing most of the stream of expelled liquid in at least one direction different from the transverse direction.

## Patentansprüche

1. Luftreifen (1) mit einem Laufstreifen (2), wobei Flanken (3) den Laufstreifen axial und radial nach innen verlängern, wobei der Laufstreifen eine Lauffläche (21), die dazu bestimmt ist, während des Fahrens mit dem Boden in Kontakt zu sein, und Seitenflächen axial zu beiden Seiten des Streifens hat, wobei dieser Luftreifen außerdem auf mindestens einer der Flanken und in der Nähe des Laufstreifens eine Umfangsrippe (4) hat, die dazu bestimmt ist, die Höhe der Wasserspritzer in Querrichtung (entsprechend einer Richtung parallel zur Drehachse des Luftreifens) im Fall eines Fahrens auf nassem Boden zu verändern,
wobei diese Umfangsrippe (4) eine Außenwand hat, die von einer ersten Wand und von einer zweiten Wand geformt wird, wobei die erste Wand (41) sich zwischen einer Flanke (3) des Luftreifens und einer Umfangslinie erstreckt, die die axial am weitesten außen liegenden Punkte (A) der Umfangsrippe verbindet, wobei die zweite Wand (42) sich in der Verlängerung der ersten Wand (41) befindet und sich radial nach außen erstreckt, bis sie sich mit einer Seitenfläche des Laufstreifens verbindet, wobei die Umfangsrippe eine Umlenkvorrichtung (5) des Flusses der Wasserspritzer im Fall eines Fahrens des Reifens auf wasserbedecktem Boden enthält, wobei diese Umlenkvorrichtung (5) von einer Vielzahl von Vorsprüngen (51) geformt wird, die auf der zweiten Wand (42) der Umfangsrippe vorstehen, wobei diese Vorsprünge (51) so angeordnet sind, dass sie den Fluss der Wasserspritzer in einer Hauptrichtung ausrichten, die sich von der Querrichtung unterscheidet, wobei dieser Luftreifen **dadurch gekennzeichnet ist, dass** die mit einer Umlenkvorrichtung (5) versehene Umfangsrippe (4) außerdem eine Vielzahl von Blöcken (6) enthält, um die Kraft des Flusses bei einem Fahren auf wasserbedecktem Boden zu verringern, wobei diese Blöcke (6) zwischen den Vorsprüngen der Umlenkvorrichtung (5) angeordnet sind.

2. Luftreifen nach Anspruch 1, **dadurch gekennzeichnet, dass** jeder auf der zweiten Wand (42) der Umfangsrippe angeordnete Vorsprung (5) konzipiert und angeordnet ist, um den Fluss der Wasserspritzer gemäß einem Winkel von mindestens gleich 30 Grad zur Querrichtung auszurichten.

3. Luftreifen nach Anspruch 2, **dadurch gekennzeichnet, dass** die Umlenkvorrichtung eine Vielzahl kleiner Rippen enthält, die einen mittleren Winkel von mehr als 30 Grad mit der Querrichtung bilden, wobei diese kleinen Rippen in der Umfangsrichtung so versetzt sind, dass jede radiale Ebene, d.h. jede Ebene, die die Drehachse enthält, mindestens zwei Rippen der Umlenkvorrichtung durchquert.

4. Luftreifen nach Anspruch 2, **dadurch gekennzeichnet, dass** jeder Vorsprung (51) von mehreren Gummiblöcken (511) gebildet wird, die auf der zweiten Wand (42) der Umfangsrippe (4) vorstehen.

5. Luftreifen nach Anspruch 1, **dadurch gekennzeichnet, dass** jeder auf der zweiten Wand (42) der Umfangsrippe (4) angeordnete Vorsprung (51) Seitenwände aufweist, deren Geometrien geeignet sind, um den größten Teil des Flusses der Flüssigkeitsspritzer gemäß mindestens einer Richtung auszurichten, die sich von der Querrichtung unterscheidet.
